Europäisches Patentamt

(19) European Patent Office

Office européen des brevets

(11) **EP 1 008 288 B1**

(12) **EUROPÄISCHE PATENTSCHRIFT**

(45) Veröffentlichungstag und Bekanntmachung des Hinweises auf die Patenterteilung:
**11.02.2004 Patentblatt 2004/07**

(51) Int Cl.⁷: **A01C 17/00**

(21) Anmeldenummer: **99114321.5**

(22) Anmeldetag: **21.07.1999**

(54) **Einrichtung zur Dosierung und Verteilung von Streugut**

Device for dispensing and distributing granular material

Dispositif pour dosage et distribution des matériaux granulaires

(84) Benannte Vertragsstaaten:
**AT BE CH CY DE DK ES FI FR GB GR IE IT LI LU MC NL PT SE**

(30) Priorität: **12.12.1998 DE 19857408**

(43) Veröffentlichungstag der Anmeldung:
**14.06.2000 Patentblatt 2000/24**

(73) Patentinhaber: **ROBERT BOSCH GMBH**
**70442 Stuttgart (DE)**

(72) Erfinder:
• **Keuper, Gerhard, Dr.**
**71229 Leonberg (DE)**

• **Steprath, Werner**
**41542 Dormagen (DE)**

(74) Vertreter: **Thürer, Andreas**
**Bosch Rexroth AG**
**Industrial Hydraulics**
**97813 Lohr am Main (DE)**

(56) Entgegenhaltungen:
**EP-A- 0 945 548          EP-A- 0 963 690**
**DE-A- 4 417 549**

**Beschreibung**

Stand der Technik

Die Erfindung geht aus von einer Einrichtung zur Dosierung und Verteilung von Streugut nach der Gattung des Hauptanspruchs.

Es ist bereits eine Einrichtung aus der DE-PS 24 63 387 bekannt, mit der ein Streugut, zum Beispiel Streusalz, in einer vorgegebenen Menge auf eine bestimmte Flächeneinheit aufgebracht werden kann. Die Dosierung des Streuguts muß hierbei unter Berücksichtigung der Vorwärtsbewegung des Fahrzeugs vorgenommen werden, das die Anordnung trägt oder zieht. Bei der bekannten Einrichtung wird die Dosierung im wesentlichen über eine Drehzahlsteuerung eines Hydromotors, in Abhängigkeit von der Geschwindigkeit des Fahrzeugs und von einer Dosiervorgabe, vom Fahrer des Fahrzeugs vorgenommen. Eine Kontrolle des ausgebrachten Streuguts wird über Zählvorgänge im Bereich eines Streutellers durchgeführt. Hierfür ist ein Streuindikator vorhanden, der den Streuvorgang überwacht. Eine häufig geforderte hohe Genauigkeit der Streugutausbringung kann mit dieser bekannten Anordnung nur unzureichend erreicht werden.

Die Antriebsvorrichtung des Streutellers arbeitet hier hydraulisch, wozu sie mit Verstellpumpe, Motoren und Ventilen ausgerüstet ist und damit relativ aufwendig und kostenintensiv baut; hohe Anforderungen an die Massenstromsensierung können hier nicht ausreichend erfüllt werden.

Ferner ist eine gattungsgemäße Einrichtung zur Dosierung und Verteilung von Streugut aus der DE-A1 44 17 549 bekannt, bei der durch die indirekte Erfassung des Massenstromes über den Druck des Druckmittels im Hydromotor sowie die Messung der Drehzahl des Streutellers eine genauere und schnellere Dosierung durchgeführt werden kann. Eine Druckmessung mit einem entsprechenden elektrohydraulischen Drucksensor, der eine dem Drehmoment des Hydromotors weitgehend proportionale Größe liefert, läßt sich mit relativ einfachen Mitteln durchführen und davon abhängig eine Dosiervorrichtung für den Massenstrom steuern. Zugleich wird über einen Drehzahlsensor die Drehzahl des Streutellers erfaßt, wobei eine anschließende elektronische Auswertung in einem Regelgerät erfolgt, so daß über eine zusätzliche Stellgröße ein Ventil steuerbar ist, das den zum Hydromotor fließenden Druckmittelstrom beeinflußt. Mit dieser Einrichtung kann eine On-Line-Regelung für den auszubringenden Massenstrom aufgebaut werden. Hierzu wird eine mathematische Gleichung für den Druck am Hydromotor als Funktion des Massenstromes und der Drehzahl verwendet, wobei als Ausgangsbasis die Aussage eines Impulssatzes verwendet wird. Es kann nun sein, daß diese mathematische Beziehung nicht alle Einflüsse ausreichend genau berücksichtigt und das Steuerergebnis nicht optimal ist. So wird durch diese mathematische Beziehung beispielsweise nicht die radiale Geschwindigkeitskomponente des Streugutes auf dem Streuteller berücksichtigt und die daraus resultierenden Lastmomente auf den Tellerantrieb, wie sie sich aus der Coriolis-Beschleunigung ergeben. Ferner ist ungünstig bei dieser Einrichtung, daß nichtlineare Effekte des Zusammenhangs zwischen Massenstrom und Druck bzw. Drehmoment am Hydromotor nicht ausreichend berücksichtigt werden können. Auch die Reibungseinflüsse im Hydromotor werden nur ungenügend kompensiert, wobei gerade diese Reibungseinflüsse abhängig von der Drehzahl, dem Druck oder der temperaturabhängigen Viskosität des Druckmittels relativ stark variieren. Auch kann die Genauigkeit der Einrichtung besonders dann leiden, wenn das Signal für den Massenstrom nur vom Zulaufdruck des Hydromotors abgeleitet wird und im Ablauf des Hydromotors noch Drücke herrschen, die mehr oder weniger stark von Null abweichen und somit die Ermittlung des drehmomentabhängigen Signals verfälschen. In manchen Fällen kann es ungünstig sein, daß der Massenstrom des Streuguts möglichst genau auf einen bestimmten Punkt des Streutellers aufgebracht werden muß. Ferner eignet sich diese Einrichtung nicht für einen rein mechanischen Antrieb des Streutellers, der hier ebenfalls über eine hydraulische Einrichtung mit Pumpe, Motor und Ventilen erfolgt.

Vorteile der Erfindung

Die erfindungsgemäße Einrichtung zur Dosierung und Verteilung von Streugut mit den kennzeichnenden Merkmalen des Hauptanspruchs hat demgegenüber den Vorteil, daß mit ihr eine genauere und schnellere Dosierung mit relativ einfachen Mitteln kostengünstig erreichbar ist. Durch die Verwendung eines Belastungskennfeldes, das die typischen und individuellen Eigenschaften des Streutellerantriebes sowie des Streuverhaltens berücksichtigt, können nichtlineare Einflüsse und Zusammenhänge weitgehend kompensiert werden. Besonders günstig ist dabei ein Belastungskennfeld, bei dem das Drehmoment an der Antriebswelle des Streutellers oder an einem vorgeschalteten Teil in Abhängigkeit vom Massenstrom für unterschiedliche Drehzahlen des Streutellers ermittelt und gespeichert wird. Mit einem derartigen Belastungskennfeld lassen sich auch unterschiedliche Ausgestaltungen des Regelgerätes sowie der Einrichtung'zur Dosierung und Verteilung des Streuguts erreichen. Die Aufbringung des Streuguts auf den Streuteller braucht nicht mehr punktgenau zu sein, sondern kann an beliebiger Stelle zwischen Streutellerachse und Streutellerrand erfolgen. Vor allem läßt sich die Antriebsvorrichtung für den Streuteller nun rein mechanisch ausbilden, so daß der Zapfwellen-Antrieb eines Schleppers dafür verwendbar ist, was eine besonders einfache und kostengünstige Einrichtung ermöglicht, mit der zudem hohe Ansprüche hinsichtlich Verteilung und Dosierung des Streuguts erfüllbar sind. Auch eignet sich die Einrichtung zur Massenstromsensierung für eine reine Anzeige der Ausbringmenge.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist eine Ausbildung nach den Ansprüchen 2 und 3, wodurch der Verteilerrrechner auch zur Anzeige von Werten bezüglich Dosierung und Verteilung des Streuguts herangezogen werden kann. Zweckmäßig ist ferner eine Ausbildung nach Anspruch 4, wenn das Belastungskennfeld mit zwei gemessenen Istwerten arbeitet und daraus den Massenstrom ableitet. Dieser erlaubt eine besonders genaue Regelung, wobei ein relativ einfaches Belastungskennfeld verwendbar ist. Eine besonders günstige Ausgestaltung ergibt sich ferner gemäß Anspruch 6, wenn als mechanischer Antrieb für den Streuteller die Zapfwelle eines Schleppers verwendet wird; dadurch verringert sich der Darstellungsaufwand für die Einrichtung erheblich, wobei zudem eine relativ genaue und stabile Arbeitsweise ermöglicht wird. Eine solche genaue Dosierung und Verteilung von Streugut ist vor allem bei Düngerstreuern erwünscht, wo das Streugut selbst relativ teuer ist und dadurch bereits einen wichtigen Kostenfaktor darstellt. Weitere vorteilhafte Ausgestaltungen ergeben sich aus den übrigen Ansprüchen, der Beschreibung sowie der Zeichnung.

Zeichnung

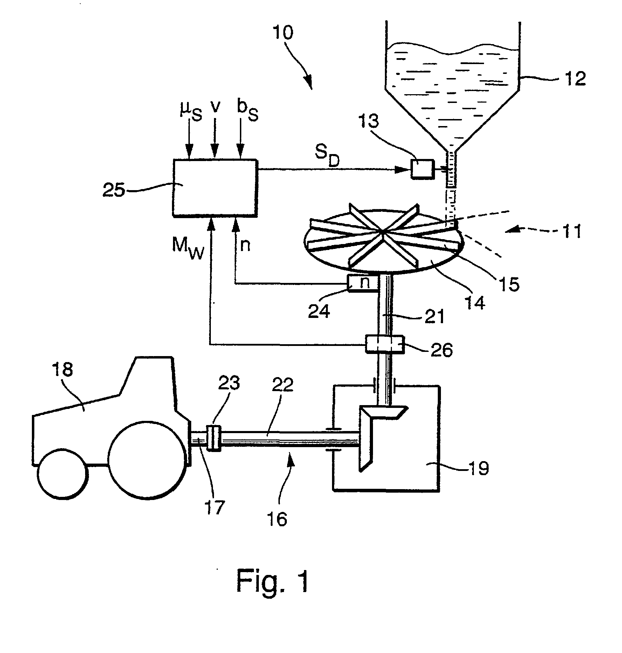

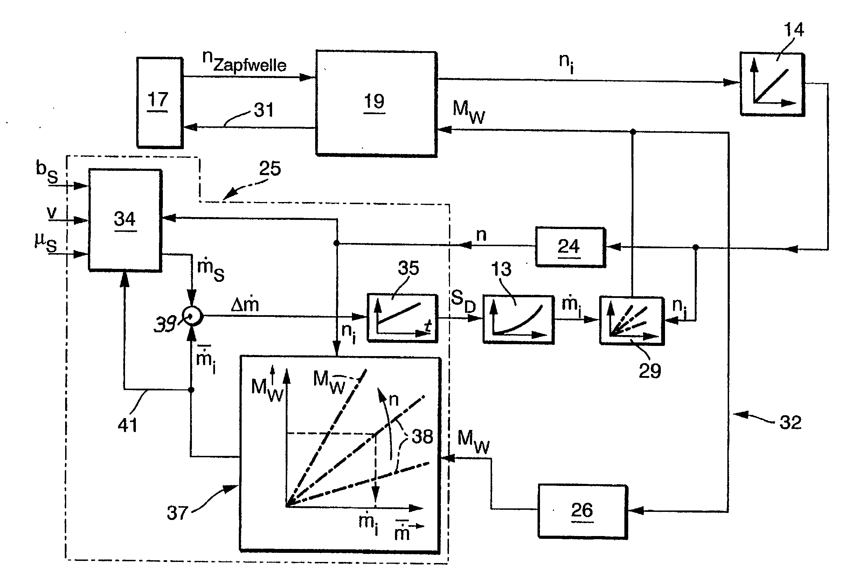

Ein Ausführungsbeispiel der Erfindung ist in der Zeichnung dargestellt und in der nachfolgenden Beschreibung näher erläutert. Es zeigen Figur 1 eine Einrichtung zur Dosierung und Verteilung von Streugut mit einem mechanischen Antrieb des Streutellers in einer gerätetechnischen Ausführungsform in stark vereinfachter Darstellung und Figur 2 ein Blockschaltbild des ersten Ausführungsbeispiels nach Figur 1, ebenfalls in vereinfachter Darstellung.

Beschreibung des Ausführungsbeispiels

In der Figur 1 ist eine erfindungsgemäße Einrichtung 10 zur Dosierung und Verteilung von Streugut 11 gezeigt, bei der dieses Streugut zum Beispiel Streusalz zur Enteisung von Straßen oder Düngemittel bei der Feldbearbeitung sein kann. Das Streugut ist in einem Vorratsbehälter 12 gelagert und wird, gesteuert über eine Dosiervorrichtung 13, auf einen Streuteller 14 aufgebracht. Der rotierende Streuteller 14 weist schaufelartige Flächen 15 auf, die während der Rotation des Streutellers 14 für eine im weitesten Sinn horizontale Verteilung des Streuguts 11 sorgen.

Der Streuteller 14 wird hier rein mechanisch über eine Antriebsvorrichtung 16 angetrieben, über welche der Streuteller 14 mit der Zapfwelle 17 eines Traktors 18 in Wirkverbindung steht. Die mechanische Antriebsvorrichtung 16 ist stark vereinfacht dargestellt und hat eine zur Übersetzung und Umleitung der Drehbewegung dienende Getriebemechanik 19, die über eine Streutellerwelle 21 mit dem Streuteller 14 und andererseits über eine Antriebswelle 22 und eine Kupplung 23 mit der Zapfwelle 17 Wirkverbindung hat. Als Zapfwelle 17 kann dabei eine heckseitig oder frontseitig am Traktor 18 angebaute Zapfwelle verwendet werden, die in der Regel mit konstanter Drehzahl angetrieben wird und die häufig auch auf verschiedene Drehzahlstufen einstellbar ist. Die Drehzahl n des Streutellers 14 wird über einen Drehzahlsensor 24 erfaßt und als erste Eingangsgröße und damit als erster Istwert einem elektronischen Regelgerät 25 zur Verfügung gestellt. Das Antriebsmoment für den Streuteller 14 wird von einem Drehmomentsensor 26 an der Streutellerwelle 21 erfaßt und dieses Drehmoment $M_W$ als zweite Eingangsgröße und damit als zweiter Istwert dem Regelgerät 25 zugeführt. Als Stellgröße $S_D$ gibt das Regelgerät 25 ein Steuersignal für die Dosiereinrichtung 13 ab. Ferner werden dem Regelgerät 25 als Sollwerte eine Streubreite $b_S$, die Fahrgeschwindigkeit v des Traktors 18, auf dem sich die Einrichtung 10 befindet, sowie eine gewünschte Streudichte $\mu_S$ bzw. ein gewünschter Massenstrom $m_S$ für das Streugut eingegeben.

Bei der Einrichtung 10 zur Dosierung und Verteilung von Streugut nach Figur 1 wird über die Erfassung und Auswertung der beiden Istwerte Drehzahl n für den Streuteller 14 und Drehmoment $M_W$ für den Streuteller 14 eine Massenstromsensierung am Streuer mit seinem rein mechanischen Antrieb vorgenommen. Dabei wird unter Nutzung eines Belastungskennfeldes, das für die jeweilige Geräteklasse ermittelt und im Regelgerät 25 gespeichert wurde, der aktuell ausgestreute Massenstrom am Streuteller 14 online bestimmt. Diese stetige Sensierung des Massenstromes am Streuteller 14 dient als Grundlage für eine bedarfsabhängige Regelung der Ausbringmenge bei dem rein mechanisch angetriebenen Streuteller 14. Dabei wird bei vorliegender Einrichtung 10 der für eine bestimmte Geräteklasse ermittelbare Zusammenhang zwischen Drehzahl des Streutellers 14, dem durchgesetzten Massenstrom $\dot{m}$ am Streuteller 14 bzw. an der Dosiervorrichtung 13 und antreibenden Drehmoment ausgenutzt.

In der Figur 2 ist nun die Einrichtung 10 zur Dosierung und Verteilung von Streugut nach Figur 1 anhand eines Blockschaltbildes näher dargestellt, aus dem die Zusammenhänge und gegenseitigen Einflüsse bei einer derartigen Einrichtung 10 deutlicher erkennbar sind. Wie die Figur 2 näher zeigt, treibt die Zapfwelle 17 über die Getriebemechanik 19 den Streuteller 14 unmittelbar mechanisch an, wobei die Zapfwelle 17 in der Regel mit einer konstanten Drehzahl arbeitet. Da das Übersetzungsverhältnis in der mechanischen Antriebsvorrichtung 16 bekannt ist, ist eine zugeordnete Drehzahl über den Drehzahlsensor 24 leicht abgreifbar und wird als erster Istwert n an das Regelgerät 25 gemeldet. Das Regelgerät 25 beeinflußt mit seiner Stellgröße $S_D$ die Dosiervorrichtung 13, welche zu dem durchgesetzten

Massenstrom des Streumittels $\dot{m}_i$ führt, der beim Auftreffen auf den Streuteller 14 diesen entsprechend belastet. Zu diesem Zweck ist in einem Block 29 ein Belastungskennfeld des Streutellers 14 dargestellt, wie es die physikalischen tatsächlichen Zusammenhänge ergeben. Wie dieser Block 29 veranschaulicht, ist das antreibende Drehmoment $M_W$ in der Streutellerwelle 21 im wesentlichen von dem durchgesetzten Massenstrom des Streumittels $\dot{m}_i$ und von der Drehzahl $n_i$ des Streutellers 14 abhängig. Das vom Block 29 abgehende Drehmoment $M_W$ wird vom Drehmomentsensor 26 gemessen und dem Regelgerät 25 gemeldet. Ferner wirkt dieses Drehmoment vom Block 29 auch auf die Getriebemechanik 19 zurück, von der die Summe aller Lastmomente über die Rückführung 31 auf die Zapfwelle 17 einwirken. Wie die Figur 2 ferner zeigt, bilden die Dosiervorrichtung 13, der Streuteller-Block 29, 14 und der Drehmomentsensor 26 Teile eines Steuer- bzw. Regelkreises 32, mit dem der Massenstrom $\dot{m}$ des Streuguts beeinflußt wird.

Wie die Figur 2 näher zeigt, weist das vorzugsweise in elektronischer Bauweise ausgeführte Regelgerät 25 einen Verteilerrechner 34 auf, dem als Sollwerte die Streubreite $b_S$, die Fahrgeschwindigkeit v des Traktors 18, auf dem sich die Einrichtung 10 befindet, sowie die gewünschte Streudichte $\mu_S$ bzw. ein gewünschter Massenstrom $m_S$ für das Streugut eingegeben werden. Ferner erhält der Verteilerrechner 34 vom Drehzahlsensor 24 die gemessene Drehzahl $n_i$ des Streutellers 14. Der Verteilerrechner 34 ermittelt aus diesen Eingangswerten ein Ausgangssignal für den Regelkreis 32, nämlich ein Sollwertsignal für den durchgesetzten Massenstrom $m_S$, um davon abhängig die Dosiervorrichtung 13 anzusteuern. Der augenblickliche Sollwert-Massenstrom $\dot{m}_S$ wird mit einem errechneten Istwert des augenblicklichen Massenstroms $\dot{m}_i$ verglichen und daraus eine Regelabweichung $\Delta\dot{m}$ des Massenstromes errechnet, aus dem schließlich mit Hilfe eines Reglerglieds 35 die Stellgröße $S_D$ zur Ansteuerung der Dosiervorrichtung 13 hergeleitet wird. Das Reglerglied 35 kann dabei vorteilhaft als PI-Regler ausgebildet sein.

Wie aus Figur 2 ferner hervorgeht, arbeitet das Regelgerät 19 mit einem abgespeicherten Belastungskennfeld 37, mit dem die typischen und individuellen Eigenschaften des Antriebs des Streutellers 14 bzw. 29 sowie des Streuverhaltens berücksichtigt werden. In diesem Belastungskennfeld 37 ist der jeweils durchgesetzte, augenblickliche, nach einem Modell errechnete Istwert des Massenstromes $\overline{\dot{m}}_i$ in Abhängigkeit vom Drehmoment $M_W$ für unterschiedliche Drehzahlen n abgelegt, was durch eine Kennlinienschar 38 veranschaulicht ist. In das Belastungskennfeld 37 werden zwei Istwerte eingegeben, nämlich der Istwert der Drehzahl $n_i$ des Streutellers 14 sowie als zweite Eingangsgröße das Drehmoment $M_W$ vom Drehmomentsensor 26. Aus beiden Eingangsgrößen wird mit Hilfe des Belastungskennfeldes 37 als Ausgangsgröße ein errechneter Istwert des Massenstroms $\overline{\dot{m}}_i$ ermittelt, um damit an einem Summenpunkt 39 eine Regelabweichung des Massenstromes $\Delta\dot{m}$ zu bilden. Das Belastungskennfeld 37, das als Modell des Streuantriebs in dem Regelgerät 19 abgelegt ist, liegt somit hier im Rückführzweig des Regelkreises 32.

Im Betrieb der Einrichtung 10 werden dem Regelgerät 19 an dem Verteilerrechner 34 die Sollwerte für die Streubreite $b_S$, die Fahrgeschwindigkeit v und den Massenstrom $m_S$ bzw. die Streudichte $\mu_S$ vorgegeben. Ferner wird dem Verteilerrechner 34 als Istwert die Drehzahl $n_i$ des Streutellers 14 mit Hilfe des Drehzahlsensors 24 gemeldet. Der Verteilerrechner 34 ermittelt daraus einen augenblicklichen Sollwert für den Massenstrom $\dot{m}_S$ und beeinflußt damit den Regelkreis 32. An dem Streuteller 14, das rein mechanisch von der Zapfwelle 17 angetrieben wird, läßt sich eine Massenstromsensierung durchführen, wobei die Istwerte von Drehzahl und Drehmoment an der Streutellerwelle 21 gemessen werden. Unter Nutzung des Belastungskennfeldes 37, das für eine jeweilige Geräteklasse ermittelt und im Regelgerät 25 abgespeichert wurde, kann dann der aktuell ausgestreute Massenstrom laufend bestimmt werden. Diese On-line-Sensierung des Massenstromes dient als Grundlage für eine bedarfsabhängige Regelung der Ausbringmenge an dem mechanisch angetriebenen Streuteller 14. Durch die Verwendung des Belastungskennfeldes 37 anstelle einer mathematischen Gleichung können nun die besonderen Eigenschaften des Streutellerantriebs und sein Streuverhalten genauer berücksichtigt werden. Vor allem lassen sich dadurch Drehmomentanteile infolge von Reibung besser berücksichtigen; zudem werden im Belastungskennfeld 37 auch nichtlineare Effekte des Zusammenhangs zwischen dem Massenstrom $\dot{m}_i$ und dem gemessenen Drehmoment am Streuteller 14 mitabgebildet und somit berücksichtigt. Die radiale Geschwindigkeitskomponente des Streugutes 11 auf dem Streuteller 14 und die daraus resultierenden Lastmomente auf den Tellerantrieb, wie sie durch die Coriolis-Beschleunigung verursacht werden, lassen sich bei dieser Regelung ebenfalls berücksichtigen. Die Einrichtung 10 erfüllt hohe Genauigkeitsanforderungen; ferner läßt sich durch die Verarbeitung zweier Istwerte für Drehzahl n und Drehmoment $M_D$ das Belastungskennfeld 37 verhältnismäßig einfach aufbauen. Ferner ist von Vorteil, daß der Massenstrom des Streuguts nun an jeder beliebigen Stelle auf dem Streuteller 14 aufgebracht werden kann.

Über eine Rückführung 41 kann der errechnete augenblickliche Istwert des Massenstroms $\dot{m}_i$ auch an den Verteilerrechner 34 rückgeführt werden, so daß dort auch eine Anzeige der jeweiligen Ausbringmenge möglich ist.

Selbstverständlich sind an der gezeigten Ausführungsform Änderungen möglich, ohne vom Gedanken der Erfindung abzuweichen. So kann der Drehzahlsensor 24 auch an einer anderen, vorgeschalteten Stelle angeordnet werden, da die Antriebsvorrichtung 16 rein mechanisch arbeitet und das jeweilige Übersetzungsverhältnis zwischen der Zapfwelle 17 bis zum Streuteller 14 hin an sich bekannt ist; auch kann die Drehzahl aus der Motordrehzahl des Traktors und der Getriebe-Übersetzung zur Zapfwelle und weiter bis zur Streutellerwelle hin abgeleitet werden. In entsprechender Weise kann auch das Antriebsmoment für den Streuteller 14 auch an einem vorgeschalteten Getriebeglied gemessen werden. Am Verteilerrechner 34 im Regelgerät 25 kann als massenstromabhängiges Eingangssignal anstelle der Streudichte $\mu_S$ auch ein Massenstromsignal $m_S$ verwendet werden. Die bedarfsgerechte Sensierung und Steuerung des Massenstroms über den Streuteller 14 läßt sich sowohl bei Salzstreuern wie bei Düngerstreuern anwenden und auch bei anderen Fahrzeugen, bei denen vergleichbare Verhältnisse vorliegen.

**Patentansprüche**

1. Einrichtung zur Dosierung und Verteilung von Streugut, mit einem rotierenden, mit dem Streugut (11) beschickbaren Streuteller (14) und mit einer Antriebsvorrichtung (16) zum Antreiben des Streutellers (14) und mit einer steuerbaren Dosiervorrichtung (13) zur Steuerung des Massenstroms ($\dot{m}$) des Streuguts sowie mit einem Regelgerät (25) zur Dosierung des Streuguts, dem zumindest als Eingangsgrößen ein Istwert der Drehzahl ($n_i$) des Streutellers (14) und ein lastabhängiges Istwertsignal für das Antriebsdrehmoment ($M_W$) des Streutellers (14) eingegeben werden und dem zusätzlich eine Sollwertgröße ($\mu_S$, $m_S$) für den geforderten Massenstrom in der Dosiervorrichtung (13) eingegeben werden und welches Regelgerät (25) wenigstens als Stellgröße ein Steuersignal ($S_D$) für die Dosiervorrichtung (13) abgibt, **dadurch gekennzeichnet, daß** das Regelgerät (25) derart ausgebildet ist, daß es mit einem abgespeicherten Belastungskennfeld (37) arbeitet, in dem die belastungsabhängigen Größen in Form von Drehmoment ($M_W$) am Streuteller (14) in Abhängigkeit vom durchgesetzten Massenstrom ($\dot{m}_i$) am Streuteller (14) für unterschiedliche Drehzahlen (n) abgelegt sind und davon abhängig mit der Eingangsgröße Drehzahl ($n_i$) ein Istwert des Massenstroms ($\dot{m}_i$) ermittelt wird, aus dem mit dem geforderten Sollwert des Massenstroms ($\dot{m}_S$) eine Regelabweichung des Massenstroms ($\Delta\dot{m}$) hergeleitet wird, die über ein Reglerglied (35) zur Stellgröße ($S_D$) für die Dosiereinrichtung (13) verarbeitet und zu dessen Ansteuerung verwendet wird, und daß der Antrieb des Streutellers (14) rein mechanisch über eine Antriebswelle (17) erfolgt.

2. Einrichtung nach Anspruch 1, **dadurch gekennzeichnet, daß** das Regelgerät (25) einen Verteilerrechner (34) aufweist, dem als Eingangsgrößen die gewünschten Werte für den Massenstrom ($\mu_S$, $m_S$), die Geschwindigkeit (v) des die Einrichtung bewegenden Fahrzeugs und/oder die Streubreite ($b_S$) eingebbar sind und der zudem ein Istwertsignal der Drehzahl ($n_i$) des Streutellers (14) erhält und der daraus eine Ausgangsgröße für einen momentanen Massenstrom-Sollwert ($\dot{m}_s$) bildet, der insbesondere dem zugeordneten Regelkreis (32) zuführbar ist.

3. Einrichtung nach Anspruch 1 oder 2, **dadurch gekennzeichnet, daß** dem Verteilerrechner (34) auch der errechnete Istwert des Massenstroms ($\overline{m}_i$) eingegeben wird und der Verteilerrechner (34) eine Anzeigevorrichtung aufweist.

4. Einrichtung nach einem der Ansprüche 1 bis 3, **dadurch gekennzeichnet, daß** das Regelgerät (25) so ausgebildet ist, daß dessen Belastungskennfeld (37) zwei Istwerte für Drehzahl ($n_i$) und drehmomentabhängigen Wert ($M_W$) am Streuteller (14) eingegeben werden und daraus ein Schätz-Ist-Wert ($\overline{m}_i$) des Massenstroms ermittelt wird, wobei das Belastungskennfeld (37) in einen Rückführzweig des Massenstrom-Regelkreises (32) geschaltet ist.

5. Einrichtung nach einem der Ansprüche 1 bis 4, **dadurch gekennzeichnet, daß** zur Ermittlung des drehmomentabhängigen Werts am Streuteller (14) ein das Drehmoment in der Antriebswelle (21) des Streutellers (14) abgreifender Drehmomentsensor (26) angeordnet ist.

6. Einrichtung nach einem der Ansprüche 1 bis 5, **dadurch gekennzeichnet, daß** die Antriebswelle die Zapfwelle (17) eines Traktors (18) ist.

7. Einrichtung nach einem der Ansprüche 1 bis 6, **dadurch gekennzeichnet, daß** die Antriebsvorrichtung (16) für den Antrieb des Streutellers (14) eine Getriebemechanik (19) umfaßt.

8. Einrichtung nach Anspruch 6 oder 7, **dadurch gekennzeichnet, daß** die Zapfwelle (17) mit konstanter Drehzahl angetrieben wird, wobei insbesondere mehrere Drehzahlstufen einstellbar sind.

9. Einrichtung nach einem der Ansprüche 1 bis 8, **dadurch gekennzeichnet, daß** das Belastungskennfeld (37) mit seiner Kennlinienschar (38) ein Modell des tatsächlichen physikalischen Verhaltens des Streutellers (14, 29) darstellt.

**Claims**

1. Device for dispensing and distributing granular material, with a rotating scattering table (14), which can be charged with the granular material (11), and with a drive device (16) for driving the scattering table (14) and with a controllable dispensing device (13) for controlling the mass flow $(\dot{m})$ of the granular material and also with a control unit (25) for dispensing the granular material, into which at least an actual value of the rotational speed $(n_i)$ of the scattering table (14) and a load-dependent actual-value signal for the drive torque $(M_W)$ of the scattering table (14) are entered as input variables and into which a set-point variable $(\mu_S, m_S)$ for the required mass flow in the dispensing device (13) is additionally entered, and which control unit (25) delivers at least, as a manipulated variable, a control signal $(S_D)$ for the dispensing device (13), **characterized in that** the control unit (25) is formed in such a way that it operates with a stored array of loading characteristics (37), in which the loading-dependent variables are stored in the form of the torque $(M_W)$ on the scattering table (14) as a function of the put-through mass flow $(\dot{m_i})$ at the scattering table (14) for different rotational speeds (n), and, dependent on this, an actual value of the mass flow $(\overline{\dot{m}_i})$ is determined with the input variable of the rotational speed $(n_i)$ and used as a basis for deriving with the required setpoint value of the mass flow $(\dot{m_s})$ a system deviation of the mass flow $(\Delta\dot{m})$, which is processed by means of a controller element (35) to form the manipulated variable $(S_D)$ for the dispensing device (13) and used for the activation of the latter, and **in that** the drive of the scattering table (14) is performed purely mechanically by means of a drive shaft (17).

2. Device according to Claim 1, **characterized in that** the control unit (25) has a distribution computer (34), into which the desired values for the mass flow $(\mu_S, m_s)$, the velocity (v) of the vehicle moving the device and/or the scattering range $(b_s)$ can be entered as input variables and which, moreover, receives an actual-value signal of the rotational speed $(n_i)$ of the scattering table (14) and forms on the basis of this an output variable for a momentary mass-flow setpoint value $(\dot{m_s})$, which can be fed in particular to the assigned control circuit (32).

3. Device according to Claim 1 or 2, **characterized in that** the calculated actual value of the mass flow $(\overline{\dot{m}_i})$ is also entered into the distribution computer (34), and the distribution computer (34) has a display device.

4. Device according to one of Claims 1 to 3, **characterized in that** the control unit (25) is formed in such a way that two actual values for the rotational speed $(n_i)$ and for a torque-dependent value $(M_W)$ at the scattering table (14) are entered into its array of loading characteristics (37) and these are used as a basis for determining an estimated actual value

$(\overline{\dot{m}_i})$ of the mass flow, the array of loading characteristics (37) being switched into a return branch of the mass-flow control circuit (32).

5. Device according to one of Claims 1 to 4, **characterized in that** a torque sensor (26) which picks up the torque in the drive shaft (21) of the scattering table (14) is arranged for determining the torque-dependent value at the scattering table (14).

6. Device according to one of Claims 1 to 5, **characterized in that** the drive shaft is the power take-off shaft (17) of a tractor (18).

7. Device according to one of Claims 1 to 6, **characterized in that** the drive device (16) for the drive of the scattering table (14) comprises a gear mechanism (19).

8. Device according to Claim 6 or 7, **characterized in that** the power take-off shaft (17) is driven at constant rotational speed, it being possible in particular for a number of speed stages to be set.

9. Device according to one of Claims 1 to 8, **characterized in that** the array of loading characteristics (37) with its family of characteristic curves (38) represents a model of the actual physical behaviour of the scattering table (14, 29).

**Revendications**

1. Installation de dosage et de distribution de produits d'épandage, comprenant un plateau d'épandage (14) rotatif recevant le produit d'épandage (11) et un dispositif d'entraînement (16) du plateau d'épandage (14) ainsi qu'un dispositif de dosage commandé (13) pour commander le débit massique $(\dot{m})$ du produit d'épandage et un appareil de régulation (25) pour doser le produit d'épandage, cet appareil recevant au moins comme grandeur d'entrée, la valeur réelle de la vitesse de rotation $(n_i)$ du plateau d'épandage (14) ainsi qu'un signal de valeur réelle dépendant de la charge pour le couple d'entraînement (Mw) du plateau d'épandage (14) ainsi qu'en plus une grandeur de consigne $(\mu_S, ms)$ du débit massique demandé au dispositif de dosage (13), et cet appareil de régulation (25) fournissant au moins comme grandeur de réglage un signal de commande $(S_D)$ pour le dispositif de dosage (13),
**caractérisée en ce que**
l'appareil de régulation (25) coopère avec un champ de caractéristiques de charge (37) mises en mémoire qui contient les grandeurs dépendant de la charge sous la forme du couple (Mw) appliqué au plateau d'épandage (14) en fonction du débit massique $(\dot{m}_i)$, fourni au plateau d'épandage (14) pour des vitesses de rotation (n) différentes et, en fonction de la vitesse de rotation (ni) comme grandeur d'entrée on détermine une valeur réelle du débit massique ($\overline{\dot{m}}_i$), à partir duquel on déduit avec le débit massique de consigne demandé ($\dot{m}_S$), une déviation de régulation du débit massique ($\Delta\dot{m}$), traitée par un organe de régulation (35) pour donner une grandeur d'actionnement ($S_D$) de l'installation de dosage (13) et qui sert à la commande de celui-ci et

l'entraînement du plateau d'épandage (14) se fait d'une manière purement mécanique par l'intermédiaire d'un arbre d'entraînement (17).

2. Installation selon la revendication 1,
   **caractérisée en ce que**
   l'appareil de régulation (25) comporte un calculateur de distribution (34) recevant comme grandeurs d'entrée les valeurs souhaitées du débit massique ($\mu_S$, $m_S$), la vitesse (v) du véhicule entraînant l'installation et/ou la largeur d'épandage ($b_S$), et qui reçoit en outre un signal de valeur réelle de la vitesse de rotation ($n_i$) du plateau d'épandage (14) pour former à partir de là une grandeur de sortie de la valeur de consigne du débit massique instantané ($\dot{m}_S$), fournie notamment au circuit de régulation (32), associé.

3. Installation selon la revendication 1 ou 2,
   **caractérisée en ce que**
   le calculateur de distribution (34) reçoit également la valeur réelle calculée du débit massique ($\overline{\dot{m}}_i$) et le calculateur de distribution (34) comporte un dispositif d'affichage.

4. Installation selon l'une des revendications 1 à 3,
   **caractérisée en ce que**
   l'appareil de régulation (25) est réalisé pour que son champ de caractéristiques de charge (37) reçoive deux valeurs réelles de la vitesse de rotation ($n_i$) et la valeur dépendant du couple ($M_W$) du plateau d'épandage (14) pour déterminer à partir de là une valeur réelle évaluée ($\overline{\dot{m}}_i$) du débit massique, le champ de caractéristiques de charge (37) étant intégré dans une branche de réaction du circuit de régulation de débit massique (32).

5. Installation selon l'une des revendications 1 à 4,
   **caractérisée en ce que**
   le plateau d'épandage (14) comporte un capteur de couple (26) détectant le couple de l'arbre d'entraînement (21) du plateau d'épandage (14) pour déterminer la valeur dépendant du couple.

6. Installation selon l'une des revendications 1 à 5,
   **caractérisée en ce que**
   l'arbre d'entraînement est la prise de force (17) d'un tracteur ( 18) .

7. Installation selon l'une des revendications 1 à 6,
   **caractérisée en ce que**
   le dispositif d'entraînement (16), assurant l'entraînement du plateau d'épandage (14), est une transmission mécanique (19).

8. Installation selon l'une des revendications 6 ou 7,
   **caractérisée en ce que**
   la prise de force (17) est entraînée à une vitesse de rotation constante et notamment plusieurs niveaux de vitesses de rotation sont réglables.

9. Installation selon l'une des revendications 1 à 8,
   **caractérisée en ce que**
   le champ de caractéristiques de charge (37) avec son faisceau de courbe caractéristique (38) constitue un modèle du comportement physique effectif du plateau d'épandage (14, 29).

Fig. 1

14

32

$n_i$

29

$\dot{m}_i$

24

26

13

$S_D$

$n$

35

$t$

38

$n$

$\overline{\dot{m}}$

$\dot{m}_i$

$M_W$

$n_i$

$\Delta\dot{m}$

$\overline{M_W}$

$M_W$

$M_W$

37

19

$M_W$

$n_i$

31

$n_{Zapfwelle}$

25

17

$\dot{m}_S$

$\overline{\dot{m}}_i$

39

34

41

$b_S$

$v$

$\mu_S$